# EUROPEAN PATENT SPECIFICATION

(11) **EP 0 648 621 B1**
(45) Date of publication and mention of the grant of the patent: **10.12.1997**
(21) Application number: 94307342.9
(22) Date of filing: 06.10.1994
(51) Int. Cl.: B60C 9/18, B60C 9/22

(54) **Pneumatic tyre**
Luftreifen
Bandage pneumatique

(30) Priority: 08.10.1993 JP 277802/93
(43) Date of publication of application: 19.04.1995
(73) Proprietor: Sumitomo Rubber Industries Ltd., Kobe-shi, Hyogo-ken (JP)
(72) Inventor: Aoki, Chieko, Nishi-ku, Kobe-shi, Hyogo-ken (JP)
(74) Representative: Stewart, Charles Geoffrey

(56) References cited:
- EP-A- 0 133 876
- EP-A- 0 280 442
- EP-A- 0 320 705
- FR-A- 2 154 535
- LU-A- 54 734

## Description

The present invention relates to a pneumatic tyre with an improved belt structure capable of reducing the running noise.

Recently, increase in running noise of the vehicles has become a social problem. Further, in a passenger car, especially in a high-grade car, quietness is required during running. Therefore, there is a great demand for a low noise tyre.

The major source of noise from a tyre is the tread configuration or pattern. Therefore, in order to reduce such noise, a great effort to improve the tread pattern has been made, and good results have been obtained.

However, as the noise from the tread pattern is decreased, the noise from other factors, i.e., then internal tyre structure is relatively increased. Accordingly, it is now necessary to reduce such noise. The inventors have discovered that vibrations of tyre sidewalls are the main cause of such noise. They found that the vibrations of the sidewalls are caused by the vibration of the breaker belt in the tread region, and thus, the vibration of the sidewalls can be reduced by reducing the vibration of the breaker belt. On the other hand, such a belt is important for the running performance factors of the tyre such as rolling resistance, cornering force and the like, and the running performances are liable to be decreased by changing the belt structure.

EP-A-0280442 discloses a pneumatic tyre comprising a breaker belt and radially outer bandage layer separated by an intermediate rubber layer. The intermediate rubber layer is formed in a single piece and serves to reduce the rolling resistance of the tyre and improve the breaker durability.

It is therefore, an object of the present invention to provide a pneumatic tyre in which the running noise is reduced by reducing the vibration of the tread reinforcing belt, without sacrificing the running performances of the tyre.

According to one aspect of the present invention, a pneumatic tyre comprises a carcass extending between a pair of bead portions through a tread portion and sidewall portions, a breaker belt disposed radially outside the carcass in the tread portion, a bandage belt disposed radially outside the breaker belt, and a vibration damper layer disposed between the breaker belt and the bandage belt, the vibration damper layer having a thickness of from 0.02 to 0.3 times the thickness of the tread portion measured from the tread surface at the tyre equatorial plane characterised in that the vibration damper layer is made of a plurality of axially divided pieces.

Preferably, the vibration damper layer has a loss tangent of not more than 0.15, and a complex elastic modulus (E*) of not less than 100 kgf/sq.cm.

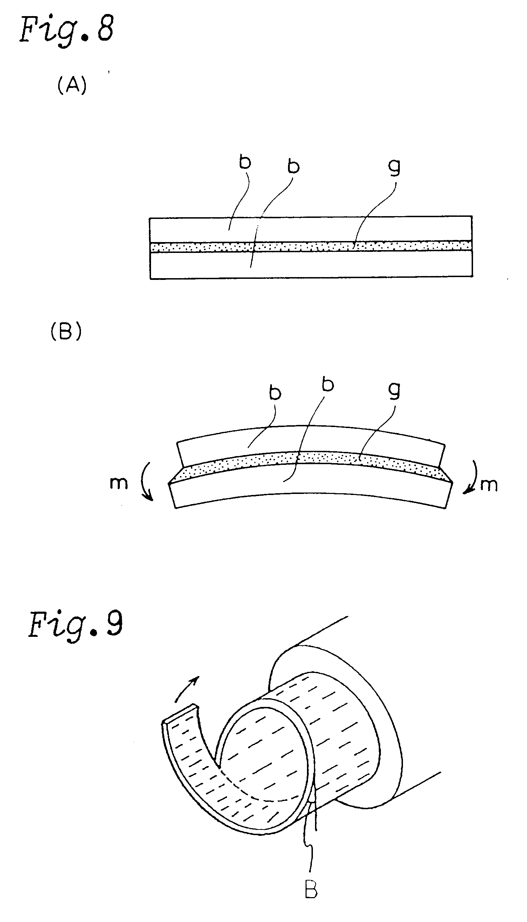

When the belt is vibrated and bent as shown in Figs.8 (A) and (B), a shearing stress is generated between the radially adjacent belt layers (b). In the present invention, as the vibration damper layer (g) is disposed therebetween and the sharing stress is transformed into heat in this layer. Therefore, the vibration energy is decreased, and the belt vibration is damped which in turn reduces the vibration of the sidewalls to reduce the tyre running noise.

If the rubber thickness (t) of the vibration damper layer is less than 0.02 times the tread thickness (T), the vibration damper layer can not control the vibration of the breaker belt. If the thickness (t) exceeds 0.3 times the tread thickness (T), the tyre weight is increased which increases fuel consumption, and the durability of the tyre is deteriorated.

Embodiments of the present invention will now be described in detail in conjunction with the accompanying drawings.
Fig.1 is a cross sectional view of an embodiment of the present invention;
Figs.2 and 3 are perspective views each schematically showing an example of the band cord;
Fig.4 is a perspective view of an example of the vibration damper layer;
Figs.5, 6 and 7 are cross sectional views each showing another example of the vibration damper layer;
Figs.8(A) and (B) are schematic cross sectional views explaining the vibration of the belt; and
Fig.9 is a perspective view explaining a method of making a rubber strip.

In the drawings, a pneumatic tyre 1 comprises a tread 2, a pair of axially spaced bead regions 4 each with a bead core 5 therein, a pair of sidewall portions 3 extending between the tread edges and bead portions, a carcass 6 having a main portion 6a extending between the bead regions 4 through the tread 2 and the sidewall portions 3, and a pair of turned up parts 6b turned up around the bead core 5 from axially inside to the outside of the tyre, a belt disposed radially outside the carcass 6 reinforcing the tread 2, the belt comprising a breaker belt 7 disposed radially outside the carcass 6, a bandage layer 10 disposed radially outside the breaker belt 7, and a vibration damper layer 9 made of a rubber composition disposed between the breaker belt 7 and the bandage layer 10, and a bead apex 8 made of hard rubber tapering radially outwards from the bead core 5 and disposed between the carcass main portion 6a and each turned up portions 6b in each bead portion 4.

The carcass 6 comprises two plies 6A and 6B of organic fibre cords, e.g. nylon, polyester, rayon, aromatic polyamide or the like, arranged radially at an angle of 75 to 90 degrees with respect to the tyre equator C so that the cords of the ply 6A cross the cords of the ply 6B and so as to form a radial or semiradial carcass construction. In this example, to provide a so called high-turnup structure, the radially outer end of the turned up portions 6b extends over the radially outer end of the bead apex 8.

The breaker belt 7 comprises two crossed plies, an inner breaker ply 7A disposed radially outside the carcass 6 adjacent to the carcass 6 and an outer breaker ply 7B disposed radially outside the inner breaker ply 7A. Each of the breaker belt plies 7A and 7B is made of parallel steel cords laid at an angle of from 10 to 45 degrees with respect to the tyre equator C. However, organic fibre cords, e.g. nylon, polyester, rayon, aromatic polyamide or the like may be used for the breaker cords. The width of the inner breaker ply 7B is 0.8 to 0.95 times the tread width WT. The outer breaker ply 7B is slightly narrower than the inner breaker ply 7A.

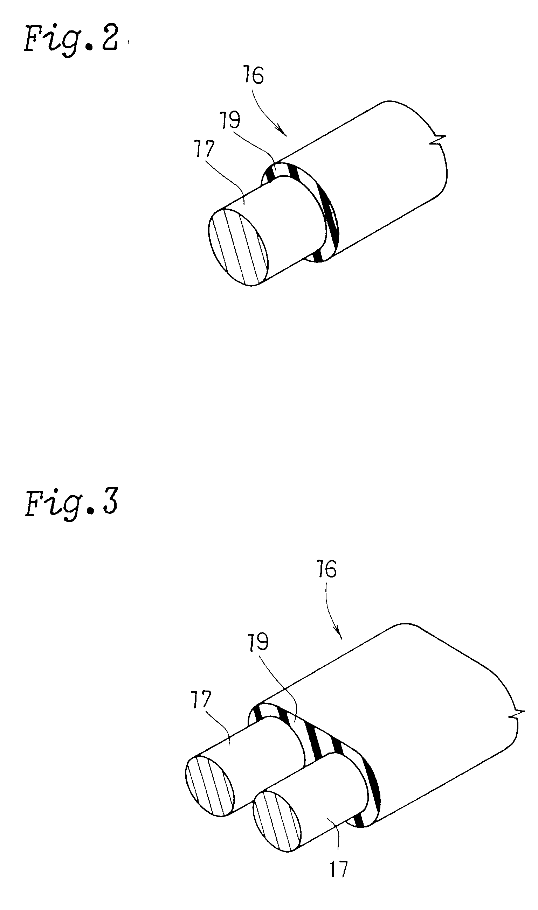

The bandage belt 10 is formed by spirally winding a reinforcing element 16 at a small angle of from about 0 to 10 degrees with respect to the tyre equator C. As shown in Figs.2 and 3, the reinforcing element 16 is made of one or more cords, for example two cords 17 coated with a topping rubber 19. For the bandage cord, a high modulus organic fibre cord such as aromatic polyamide fibre cord or steel cord can be used. The bandage belt 10 has a width WD so that it substantially covers the substantially overall width of the breaker belt 7.

The vibration damper layer 9 is disposed between the breaker belt 7 and bandage belt 10, and directly contacts both the breaker belt 7 and the bandage belt 10.

The thickness (t) of the vibration damper layer 9 is in the range of from 0.02 to 0.30 times the tread thickness T. The tread thickness T is the radial distance measured from the tread face 2A to the tyre inner surface 2B at the tyre equatorial plane C.

The width WG of the vibration damper layer 9 is not more than the maximum width WB of the breaker belt 7.

The complex elastic modulus (E*) of the vibration damper layer 9 is not less than 100 kgf/cm² and more preferably also not more than 400 kgf/cm².

The loss tangent of the vibration damper layer 9 is not more than 0.15.

If the complex elastic modulus (E*) is less than 100 kgf/cm², the cornering force decreases. If more than 400 kgf/cm², the vibration damper layer 9 is decreased in elasticity, and sometimes the damping effect can not be obtained.

If the loss tangent is more than 0.15, the rolling resistance is liable to increase.

In this embodiment, to facilitate achieving the above-mentioned elastic properties, the vibration damper layer 9 is made of a rubber composition which contains short fibres uniformly mixed in its base rubber material.

For the short fibres, organic fibres such as nylon, aromatic polyamide, cotton fibre, or the like, having a diameter in the range of from 1 micrometers to 0.1 millimetres and a length in the range of from 20 micrometers to 2 millimetres may be used. Preferably, nylon fibres are used.

By providing the short fibres in a base rubber material, the complex elastic modulus (E*) of the vibration damper layer is increased in both the storage modulus (E') and loss modulus (E''). Further, the increase in the storage modulus (E') is larger than the increase in the loss modulus (E''), thereby decreasing the loss tangent or loss factor. As a result, the cornering force increases to improve the running stability. Further, as the internal energy loss of the vibration damper layer increases, the vibration energy is more effectively transformed into heat, and the vibration damping effect is increased.

Preferably, at least 90% in number of the short fibres are oriented in a certain direction within plus or minus 20 degrees. In this case, the above-mentioned complex elastic modulus (E*) is measured by applying a strain in the oriented direction.

Some examples of the rubber composition are given in Table 1.

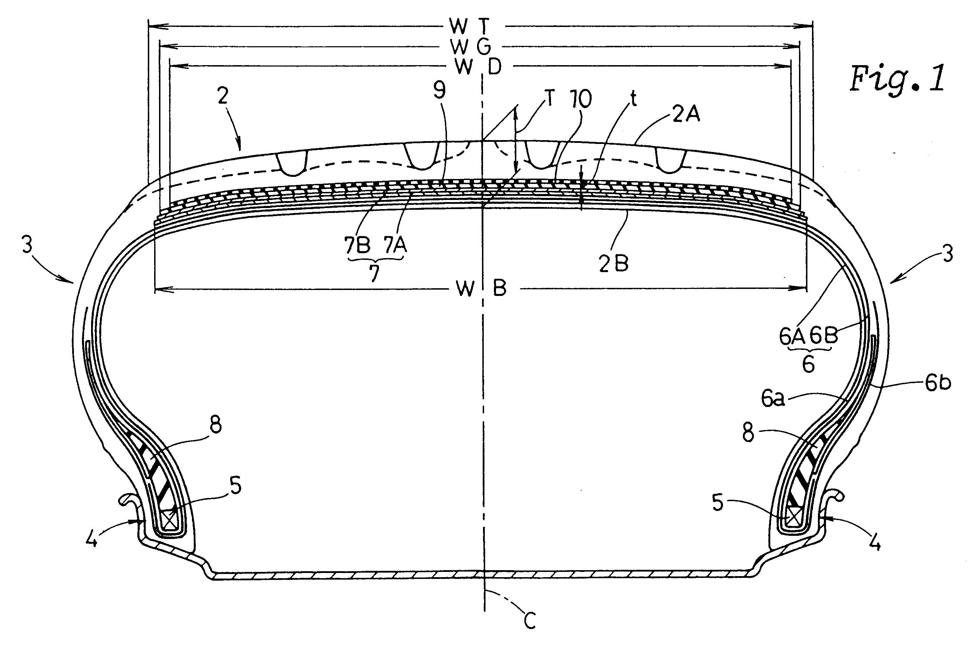

Fig.1 is an example of the vibration damper layer 9 having a one-piece structure, the width WG of which is slightly smaller than the maximum breaker belt width WB.

In this example, preferably, at least 90% of the short fibres are oriented in the tyre circumferential direction within plus or minus 20 degrees, so that the vibration damper layer 9 is increased in tensile rigidity and compressive rigidity in the tyre circumferential direction, and the steering stability is improved. Further, the tyre production efficiency may be improved.

However, it is also possible to orient at least 90% of the short fibres in the tyre meridian direction within plus or minus 20 degrees, whereby the vibration damper layer 9 is increased in tensile rigidity and compressive rigidity in the tyre axial direction, and the angle formed with the belt cords becomes near to 90 degrees. As a result, the belt cord angle change which occurs in cornering is effectively decreased and the cornering power is increased to improve manoeuvrability such as handling response and the like. Further, movement of the belt cords is decreased which decreases the rolling resistance.

Further, it is also possible to orient at least 90% of the short fibres at a bias direction such as 45 degrees to the tyre circumferential direction within plus or minus 20 degrees. In this case, the above-explained effects of the former two cases will be shared.

According to the present invention, the vibration damper layer 9 can be made of a plurality of pieces.

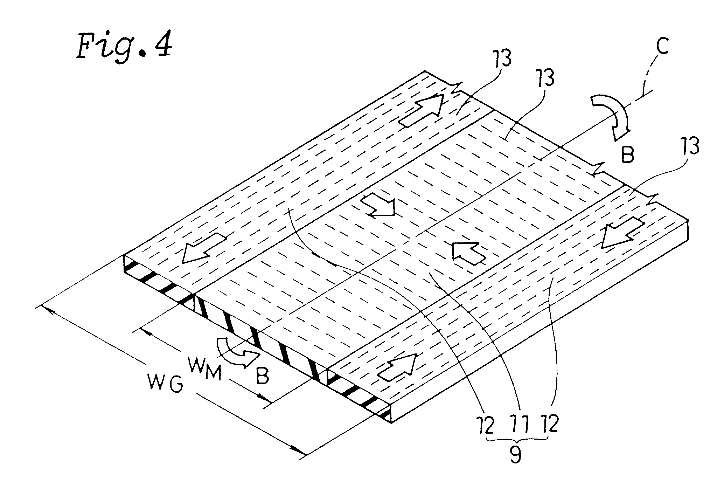

Fig.4 shows an example of a vibration damper layer 9 which consists of three pieces: a central piece 11 centred on the tyre equator C and two lateral pieces 12 each disposed on each side thereof in an abutting relationship.

In this example, the central piece 11 is arranged with the short fibres oriented in the tyre meridian direction, and each lateral piece 12 is arranged with the short fibres oriented in the tyre circumferential direction.

In each piece, at least 90% of the short fibres are oriented in the circumferential or meridian direction within plus or minus 20 degrees as explained above.

The width WM of the central piece 11 is in the range of from 1/3 to 1/2 times the overall width WG of the vibration damper layer 9.

As a result, when the vibration damper layer in the ground contacting patch is subjected to a bending moment (B) as shown in Fig.4, since one lateral portion is subjected to a compressive stress and the other to a tensile stress, the lateral piece 12 effectively resists its stress. On the other hand, the central piece 11 decreases the belt cord angle change and increases the cornering power as explained above. Therefore, the manoeuvrability, rolling resistance and steering stability can be improved.

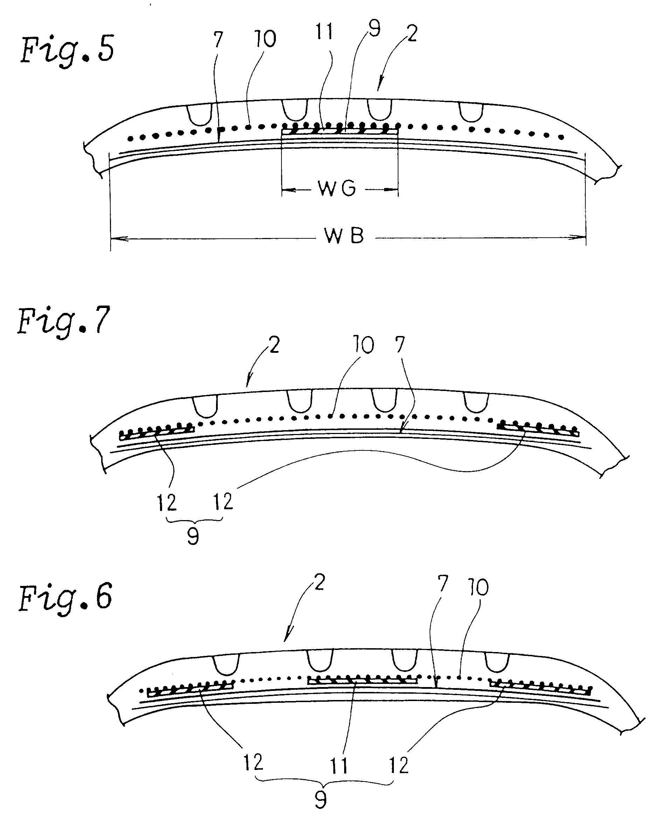

Fig.5 shows another example of the vibration damper layer 9, which has a narrow width WG of 1/4 to 1/2 times the breaker belt width WB and is disposed in only the tread central portion.

Fig.6 shows still another example of the vibration damper layer 9, which consists of three pieces: a central piece 11 and two lateral pieces 12 similar to the example shown in Fig.4, but a space is provided between the axially adjacent pieces.

Fig.7 shows still more another example of the vibration damper layer 9, which consists of two axially spaced lateral pieces 12, each disposed in each edge portion of the breaker belt 7.

Incidentally, the normal method to manufacture the vibration damper layer is to make a rubber strip formed in the form of plain sheet by means of calendar roller or extruder. However, it is also possible to use a rubber strip formed by cutting a rubber tube extruded in a form of tube.

As shown in Fig.9, when the rubber tube is cut spirally at a certain angle (B) to the direction of the axis of the tube, a continuous long strip in which the fibre orientation direction is (90 - B) degrees to the longitudinal direction can be obtained. By increasing the diameter of the tube, the angle (B) can be decreased.

Test tyres of size 205/55R15 having the construction shown in Fig.1 were tested for the following performances.

### 1) Running noise

According to the coasting test procedure specified in Japanese JASO-C606, a test car provided with the test tyres was coasted for 50 metres at a passing speed of 60 km/h on a straight test course, and the maximum noise level was measured.

### 2) Rolling resistance

The rolling resistance was measured using a rolling resistance tester. The results are indicated by an index based on the Prior art tyre set at 100. The smaller the index, the smaller the rolling resistance.

### 3) Cornering power

The cornering power was measured using an indoor flat belt tester. The results are indicated by an index based on the Prior art tyre being 100. The larger the index, the better the cornering power.

Through the tests, it was confirmed that the pneumatic tyres according to the present invention are improved in running noise without sacrificing the cornering power and rolling resistance.

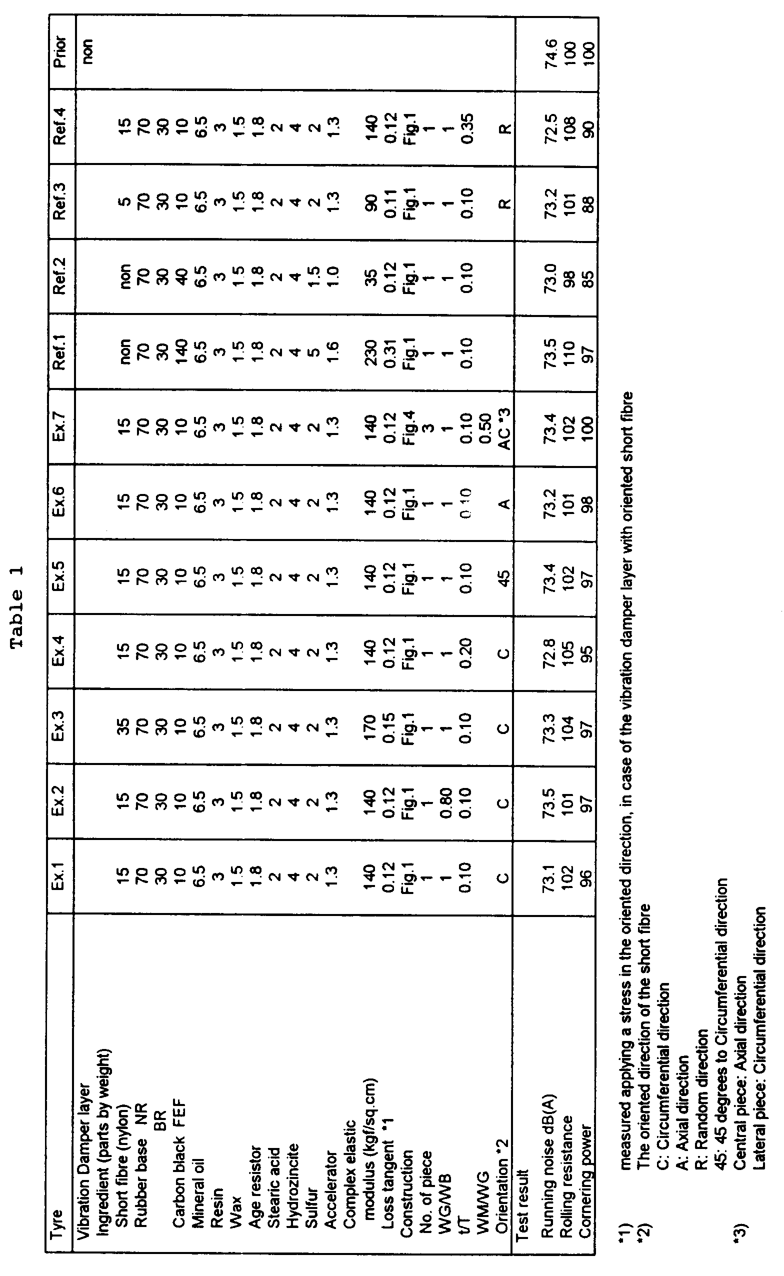

## Claims

1. A pneumatic tyre comprising a carcass (6) extending between a pair of bead portions (4) through a tread portion (2) and sidewall portions (3), a breaker belt (7) disposed radially outside the carcass in the tread portion, a bandage belt (10) disposed radially outside the breaker belt, and a vibration damper layer disposed between the breaker belt and the bandage belt (10), the vibration damper layer (9) having a thickness (t) of from 0.02 to 0.3 times the thickness (T) of the tread portion (2) measured from the tread surface to the tyre inner surface at the tyre equatorial plane (C) characterised in that the vibration damper layer (9) is made of a plurality of axially divided pieces (11,12).

2. A pneumatic tyre according to claim 1, characterised in that the vibration damper layer (9) contains short fibres.

3. A pneumatic tyre according to claim 2, characterised in that at least 90% of the short fibres are oriented in a certain direction, and the vibration damper layer (9) has a loss tangent of not more than 0.15, and a complex elastic modulus of not less than 100 kgf/cm², when measured applying a stress in the oriented direction of the short fibres.

4. A pneumatic tyre according to claim 3, characterised in that the complex elastic modulus is less than 400 kgf/cm² when measured applying a stress in the oriented direction of the short fibres.

5. A pneumatic tyre according to claim 1, 2, 3 or 4, characterised in that the vibration damper layer (9) is of one piece having a width (WG) of not more than the maximum width (WB) of the breaker belt.

6. A pneumatic tyre according to claim 3, 4 or 5, characterised in that the vibration damper layer (9) is of one piece, and the orientation direction of the short fibres is the tyre circumferential direction within plus or minus 20 degrees.

7. A pneumatic tyre according to claim 3, 4 or 5, characterised in that the vibration damper layer (9) is of one piece, and the orientation direction of the short fibres is the tyre meridian direction within plus or minus 20 degrees.

8. A pneumatic tyre according to claim 3, 4 or 5, characterised in that the vibration damper layer (9) is of one piece, and the orientation direction of the short fibres is at 45 degrees to the tyre circumferential within plus or minus 20 degrees.

9. A pneumatic tyre according to claim 1, 2, 3 or 4, characterised in that the overall width of the vibration damper layer (WG) is not more than the maximum width (WB) of the breaker belt.

10. A pneumatic tyre according to any of claims 1 to 9, characterised in that the vibration damper layer (9) consists of a central piece (11) and a pair of lateral pieces (12) each disposed one on each side of the central piece, the central piece (11) containing short fibres oriented in the tyre meridian direction, and each said lateral piece (12) containing short fibres orientated in the tyre circumferential direction.

11. A pneumatic tyre according to claim 10, characterised in that the central piece (11) abuts the lateral pieces (12) in the tyre axial direction, and the width (WM) of the central piece (11) is in the range of from 1/3 to 1/2 times the overall width (WG) of the vibration damper layer.

12. A pneumatic tyre according to any of claims 1 to 10, characterised in that the central piece (11) is spaced apart from the lateral pieces (12) in the tyre axial direction.

13. A pneumatic tyre according to any one of the preceding claims, characterised in that said breaker belt (7) comprises two crossplies, a radially inner ply (7A) disposed adjacently to the carcass (6) and a radially outer ply (7B) disposed radially outside said radially inner ply (7A), each ply (7A,7B) is made of parallel cords laid at an angle of from 10 to 45 degrees with respect to the tyre equator (C), and said band belt (10) is formed by spirally winding a reinforcing element (16) at a small angle with respect to the tyre equator (C), said reinforcing element (16) is made of at least one cord coated with a topping rubber (19).

## Patentansprüche

1. Pneumatischer Reifen umfassend eine Karkasse (6), die sich zwischen einem Paar Wulstabschnitte (4) durch einen Laufflächenabschnitt (2) und Seitenwandabschnitte (3) erstreckt, einen Breakergürtel (7), der radial außerhalb der Karkasse in dem Laufflächenabschnitt angeordnet ist, einen Bandagengürtel (10), der radial außerhalb des Breakergürtels angeordnet ist, und eine Vibrationsdämpfungsschicht, die zwischen dem Breakergürtel und dem Bandagengürtel (10) angeordnet ist, wobei die Vibrationsdämpfungsschicht (9) eine Dicke (t) von 0,02 bis 0,3 mal der Dicke (T) des Laufflächenabschnitts (2) aufweist, die von der Laufflächenoberfläche zu der Reifeninnenoberfläche bei der Reifenäquatorebene (C) gemessen ist,
dadurch **gekennzeichnet,**
daß die Vibrationsdämpfungsschicht (9) aus einer Vielzahl axial geteilter Teile (11, 12) hergestellt ist.

2. Pneumatischer Reifen nach Anspruch 1,
dadurch **gekennzeichnet,**
daß die Vibrationsdämpfungsschicht (9) kurze Fasern enthält.

3. Pneumatischer Reifen nach Anspruch 2,
dadurch **gekennzeichnet,**
daß mindestens 90% der kurzen Fasern in einer bestimmten Richtung ausgerichtet sind, und die Vibrationsdampfungsschicht (9) eine Verlusttangente von nicht mehr als 0,15, und einen komplexen Elastizitätsmodul von nicht weniger als 100 kgf/ cm² zufweist, wenn bei Aufbringen einer Beanspruchung in der Ausrichtungsrichtung der kurzen Fasern gemessen wird.

4. Pneumatischer Reifen nach Anspruch 3,
dadurch **gekennzeichnet,**
daß der komplexe Elastizitätsmodul weniger als 400 kgf/cm² beträgt, wenn bei Aufbringen einer Beanspruchung in der Ausrichtungsrichtung der kurzen Fasern gemessen wird.

5. Pneumatischer Reifen nach Anspruch 1, 2, 3 oder 4,
dadurch **gekennzeichnet,**
daß die Vibrationsdämpfungsschicht (9) aus einem Teil besteht, der eine Breite (WG) von nicht mehr als der maximalen Breite (WB) des Breakergürtels aufweist.

6. Pneumatischer Reifen nach Anspruch 3, 4 oder 5,
dadurch **gekennzeichnet,**
daß die Vibrationsdämpfungsschicht (9) aus einem Teil besteht, und die Ausrichtungsrichtung der kurzen Fasern in der Reifenumfangsrichtung innerhalb von plus oder minus 20 Grad liegt.

7. Pneumatischer Reifen nach Anspruch 3, 4 oder 5,
dadurch **gekennzeichnet,**
daß die Vibrationsdämpfungsschicht (9) aus einem Teil besteht, und die Ausrichtungsrichtung der kurzen Fasern in der Reifenmeridianrichtung innerhalb von plus oder minus 20 Grad liegt.

8. Pneumatischer Reifen nach Anspruch 3, 4 oder 5,
dadurch **gekennzeichnet,**
daß die Vibrationsdämpfungsschicht (9) aus einem Teil besteht, und die Ausrichtungsrichtung der kurzen Fasern unter 45 Grad zu dem Reifenumfang innerhalb von plus oder minus 20 Grad liegt.

9. Pneumatischer Reifen nach Anspruch 1, 2, 3 oder 4,
dadurch **gekennzeichnet,**
daß die Gesamtbreite der Vibrationsdämpfungsschicht (WG) nicht mehr als die maximale Breite (WB) des Breakergürtels beträgt.

10. Pneumatischer Reifen nach irgendeinem der Ansprüche 1 bis 9,
dadurch **gekennzeichnet,**
daß die Vibrationsdämpfungsschicht (9) aus einem zentralen Teil (11) und einem Paar seitlicher Teile (12) besteht, von denen jeweils einer auf jeder Seite des zentralen Teils angeordnet ist, der zentrale Teil (11) kurze Fasern enthält, die in der Reifenmeridianrichtung ausgerichtet sind, und jeder seitliche Teil (12) kurze Fasern enthält, die in der Reifenumfangsrichtung ausgerichtet sind.

11. Pneumatischer Reifen nach Anspruch 10,
dadurch **gekennzeichnet,**
daß der zentrale Teil (11) an die seitlichen Teile (12) in der Reifenaxialrichtung anstößt, und die Breite (WM) des zentralen Teils (11) in dem Bereich von 1/3 bis 1/2 mal der Gesamtbreite (WG) der Vibrationsdämpfungsschicht liegt.

12. Pneumatischer Reifen nach irgendeinem der Ansprüche 1 bis 10,
dadurch **gekennzeichnet,**
daß der zentrale Teil (11) von den seitlichen Teilen (12) in der Reifenaxialrichtung weg beabstandet ist.

13. Pneumatischer Reifen nach irgendeinem der vorstehenden Ansprüche,
dadurch **gekennzeichnet,**
daß der Breakergürtel (7) zwei Kreuzlagen umfaßt, eine radial innere Lage (7A), die benachbart zu der Karkasse (6) angeordnet ist, und eine radial äußere Lage (7B), die radial außerhalb der radial inneren Lage (7A) angeordnet ist, wobei jede Lage (7A, 7B) aus parallelen Corden hergestellt ist, die unter einem Winkel von 10 bis 45 Grad bezüglich des Reifenäquators (C) gelegt sind, und der Bandgürtel (10) durch spiralförmiges Wickeln eines verstärkenden Elements (16) unter einem kleinen Winkel bezüglich des Reifenäquators (C) gebildet ist, wobei das verstärkende Element (16) aus mindestens einem Cord hergestellt ist, der mit einem Überzugsgummi (19) überzogen ist.

## Revendications

1. Pneumatique comprenant une carcasse (6) disposée entre deux parties de talon (4) avec interposition d'une partie de bande de roulement (2) et de parties de flanc (3), une ceinture (7) de nappe sommet placée radialement à l'extérieur de la carcasse dans la partie de bande de roulement, une ceinture de bandage (10) disposée radialement à l'extérieur de la ceinture de nappe sommet, et une couche d'amortisseur de vibrations disposée entre la ceinture de nappe sommet et la ceinture de bandage (10), la couche (9) d'amortisseur de vibrations ayant une épaisseur (t) comprise entre 0,02 et 0,3 fois l'épaisseur (T) de la partie de bande de roulement (2), mesurée depuis la surface de la bande de roulement jusqu'à la surface interne du pneumatique au plan équatorial (C) du pneumatique, caractérisé en ce que la couche (9) d'amortisseur de vibrations est formée de plusieurs pièces divisées axialement (11, 12).

2. Pneumatique selon la revendication 1, caractérisé en ce que la couche (9) d'amortisseur de vibrations contient des fibres courtes.

3. Pneumatique selon la revendication 2, caractérisé en ce que 90 % au moins des fibres courtes sont orientées dans une certaine direction, et la couche (9) d'amortisseur de vibrations a une tangente à l'angle de pertes qui ne dépasse pas 0,15, et un module complexe d'élasticité qui n'est pas inférieur à 1.10⁷ Pa (100 kgf/cm²) mesuré par application d'une contrainte dans la direction d'orientation des fibres courtes.

4. Pneumatique selon la revendication 3, caractérisé en ce que le module complexe d'élasticité est inférieur à 4.10⁷ Pa (400 kgf/cm²) lorsqu'il est mesuré par application d'une contrainte dans la direction d'orientation des fibres courtes.

5. Pneumatique selon la revendication 1, 2, 3 ou 4, caractérisé en ce que la couche (9) d'amortisseur de vibrations est formée en une seule pièce ayant une largeur (WG) ne dépassant pas la largeur maximale (WB) de la ceinture de nappe sommet.

6. Pneumatique selon la revendication 3, 4 ou 5, caractérisé en ce que la couche (9) d'amortisseur de vibrations est en une seule pièce, et la direction d'orientation des fibres courtes est la direction circonférentielle du pneumatique, avec une tolérance de ±20°.

7. Pneumatique selon la revendication 3, 4 ou 5, caractérisé en ce que la couche (9) d'amortisseur de vibrations est en une seule pièce, et la direction d'orientation des fibres courtes est dans la direction méridienne du pneumatique, avec une tolérance de ±20°.

8. Pneumatique selon la revendication 3, 4 ou 5, caractérisé en ce que la couche (9) d'amortisseur de vibrations est en une seule pièce, et la direction d'orientation des fibres courtes forme un angle de 45° avec la direction circonférentielle du pneumatique, avec une tolérance de ±20°.

9. Pneumatique selon la revendication 1, 2, 3 ou 4, caractérisé en ce que la largeur totale (WG) de la couche d'amortisseur de vibrations ne dépasse pas la largeur maximale (WB) de la ceinture de nappe sommet.

10. Pneumatique selon l'une quelconque des revendications 1 à 9, caractérisé en ce que la couche (9) d'amortisseur de vibrations est constituée d'une pièce centrale (11) et de deux pièces latérales (12) disposées chacune d'un côté de la pièce centrale, la pièce centrale (11) contenant des fibres courtes orientées dans la direction méridienne du pneumatique, chacune des pièces latérales (12) contenant des fibres courtes orientées dans la direction circonférentielle du pneumatique.

11. Pneumatique selon la revendication 10, caractérisé en ce que la pièce centrale (11) est en butée contre les pièces latérales (12) dans la direction axiale du pneumatique, et la largeur (WM) de la pièce centrale (11) est comprise entre le tiers et la moitié de la largeur totale (WG) de la couche d'amortisseur de vibrations.

12. Pneumatique selon les revendications 1 à 10, caractérisé en ce que la pièce centrale (11) est placée à distance des pièces latérales (12) dans la direction axiale du pneumatique.

13. Pneumatique selon l'une quelconque des revendications précédentes, caractérisé en ce que la ceinture (7) de nappe sommet comporte deux nappes croisées, une nappe radialement interne (7A) disposée afin qu'elle soit adjacente à la carcasse (6) et une nappe radialement externe (7B) disposée radialement à l'extérieur de la nappe radialement interne (7A), chaque nappe (7A, 7B) étant formée de câblés parallèles faisant un angle compris entre 10 et 45° avec l'équateur (C) du pneumatique, et la ceinture (10) de bandage est formée par enroulement en spirale d'un élément d'armature (16) faisant un petit angle avec l'équateur (C) du pneumatique, l'élément d'armature (16) étant formé d'au moins un câblé revêtu d'un caoutchouc d'enrobage (19).
